# EUROPEAN PATENT SPECIFICATION

(11) **EP 2 690 997 B1**
(45) Date of publication and mention of the grant of the patent: **12.06.2019**
(21) Application number: 12712635.7
(22) Date of filing: 29.03.2012
(51) Int. Cl.: A47J 47/00

(54) **CUTTING BOARD SYSTEM**
SCHNEIDBRETTSYSTEM
SYSTÈME DE PLATEAU DE DÉCOUPE

(30) Priority: 31.03.2011 DK 201100236
(43) Date of publication of application: 05.02.2014
(73) Proprietor: Profboard Production APS, 7442 Engesvang (DK)
(72) Inventor: VERNER, Pedersen, DK-3200 Helsinge (DK)
(74) Representative: Nordic Patent Service A/S
(86) International application number: PCT/EP2012/055682
(87) International publication number: WO 2012/130974

(56) References cited:
- EP-A1- 1 925 245
- WO-A1-2006/133705
- DE-U1-202009 004 963
- DK-A- 200 900 298
- FR-A1- 2 808 668
- US-A1- 2004 217 533

## Description

### FIELD OF THE INVENTION

The present invention relates generally to cutting boards used for food preparation. In particular, the invention relates to a cutting board system having a rigid support base and a slab defining a work surface for cutting food products, where the slab is removably associated with the support base. By using removable slabs, cross-food contamination can be minimized.

### BACKGROUND OF THE INVENTION

Cutting boards used for processing foods are pervasive in restaurants and domestic kitchens. A typical restaurant may have five or more cutting boards. Traditionally, cutting boards have been made of a hardwood, such as maple, oak, or ash. However, concerns about sanitizing a wooden cutting board has led to the increased use of other materials. Polymeric materials, or plastics, such as for example, high density polyethylene (HDPE) are non-porous and easier to clean. HDPE board surfaces get damaged after repeated use as knives cut into the surface. The cut marks in the surface provide locations where bacteria can thrive, and sanitization of plastic cutting boards becomes a critical as it is for wooden cutting boards.

Because of high volume of food preparation and concerns regarding cross-contamination of bacteria from different type of foods, a restaurant kitchen may have 5 or 6 cutting boards in use at any given time. Separate boards are required to process, cut, slice, or chop different foodstuffs. Alternatively, a single cutting board would have to be washed and sanitized before use with different foodstuffs. This is costly, time consuming and impractical in a restaurant setting.

Since even plastic cutting boards become damaged and need to be periodically replaced, the cost of maintaining a supply of useable cutting boards is significant to a restaurant or other food processing facility.

When multiple cutting boards are used in a restaurant, they will have to be washed and sanitized at times throughout the hours of operation, and finally at the end of the day.

Further, to prevent conventional cutting boards from moving or sliding during food processing, typically a wet towel is placed underneath the board. This is effective, but it can be unsanitary. An efficient means to stabilize the board during cutting is desirable.

FR-A-2 808 668 discloses a cutting board system comprising a rigid support base and a disposable cover sheet to be used as a work surface, which cover sheet is removably associated with the support base. The support base holds retaining elements having a head part on top of a shoulder part, where the head part has a flat upper surface and a larger cross-sectional area than the shoulder part. The cover sheet holds openings formed as oval slots having a larger cross-sectional area than the head part of the retaining elements, whereby the cover sheet can easily be removed from the support base. The oval slots of the openings does not secure the horizontal positioning of the cover sheet on the support base. Furthermore, the head part of a retaining elements does not fully cover the oval slot of a cover sheet opening, whereby fluid from food being processed may enter from the cover sheet down to the support base.

DE-U-20 2009 004963 discloses a cutting board system comprising a tray or rigid support base and a cutting pad. The tray has a plurality of locating pins projecting upwardly above the surface of the tray, and the cutting pad has recesses or openings, which are configured and arranged correspondingly with the location pins. The location pins have an upwards curved upper end, and a length allowing several pads or covers to be removably positioned on top of each other and on top of the tray. The cross-sectional area of the upper end part of the location pins is no larger than the cross-sectional area of the lower part of the location pins. Thus, the formation of the location pins does not secure the vertical positioning of the pads or covers on the tray, but allows an easy positioning and removal of the different pads or covers, while securing the horizontal positioning of the pads or covers on the tray. Furthermore, since the location pins hold no enlarged head part, which might have covered the openings in the cutting pad, fluid from food being processed may enter from the cutting pad down to the tray or support base.

DK-A-2009 00298 discloses a cutting board system comprising a rigid support base and a work surface slab, which is removably associated with the support base. The support base holds retaining elements having a head part on top of a shoulder part, where the head part has a flat upper surface and a larger cross-sectional area than the shoulder part. The slab holds retaining openings, which are slightly smaller than the cross-sectional area of the head part of the retaining elements, whereby the slab may be hold in position at the support base by the retaining elements. However, the formation of the flat surfaced head parts makes it difficult to attach the work surface slab to the support base.

Accordingly, there is a need for an improved cutting board system that is stable, easy to assemble, expedites the processing of foods, and reduces the possibility to contaminate food due to cross-contamination from processing different food types.

The present invention provides solutions addressing one or more of the above described problems.

### SUMMARY OF THE INVENTION

According to the present invention there is provided a cutting board system as defined in claim 1.

Thus, when the slab is fixed to the support base via the retaining elements and retaining openings, the lower surface part of the head part of each retaining element covers the enclosing wall of the corresponding retaining opening of the slab.

According to the invention, the slab is made of an at least partly flexible material, thereby allowing the curved upwards head part of the retaining elements to be pressed through the retaining openings when fixing the slab to the support base.

It is preferred that the height of the retaining element shoulder is substantially equal to the thickness of the slab, and it is also preferred that the cross-sectional area of the retaining element shoulder is substantially equal to the cross-sectional area of the retaining openings. According to an embodiment of the invention, the head part of the retaining elements has a curved edge connecting the coved upper surface with a straight lower surface.

It is within an embodiment of the invention that the shoulder part has a larger cross-sectional area than the body part of the retaining element, and that the body part is inserted in a corresponding recess of the support base whereby a lower surface part of the shoulder part rests on the support base. A number of projecting streaks or rings may be provided at the body part of the retaining elements to engage the wall of the recesses of the support base. It is preferred that the cross-sectional area of the recesses of the support base is substantially equal to the cross-sectional area of the body part of the corresponding retaining elements.

It is also within one or more embodiments of the invention that a number of feet are provided at the bottom of the rigid support base, with a foot having a stainless steel part being secured to the support base and a rubber part being inserted into the stainless steel part and extending below the stainless steel part. The stainless steel part may have a lower edge angled or curved inwards, and the rubber part may have a corresponding groove, with the rubber part being connected to the stainless steel part by the lower edge being inserted into the groove. Here, the lower edge may reach all the way round the stainless steel part, and the groove may reach all the way round the rubber part, whereby a substantially watertight connection may be obtained between the steel part and the rubber part.

The present invention also covers embodiments further comprising an upper chopping board shaped to fit the support base and having a number of recesses corresponding to the retaining elements of the support base, the opening of said recesses being dimensioned to fit over the head part and shoulder part of the retaining elements, whereby the upper chopping board can be arranged on top of the support base with the head and shoulder part of the retaining elements extending into the recesses. It is preferred that the cross-sectional area of an upper chopping board recess is substantially equal to or slightly larger than the cross-sectional area of the head part of the corresponding retaining element.

The rigid support base and the upper chopping board may be made of polyethylene and the slab may be made of polypropylene.

It is also within an embodiment of the cutting board system of the present invention that the system comprises a plurality of slabs of same dimensions.

### BRIEF DESCTIPTION OF THE DRAWINGS

Figs. 1a and 1b illustrate a cutting board system with a support base and cutting slab according to an embodiment of the invention,
Figs. 2a and 2b illustrate an embodiment of the cutting board system of Fig. 1 with stabilizing feet provided at the support base, and
Figs. 3a and 3b illustrate a further embodiment of the cutting board system of Fig. 1 in which an upper cutting board replaces the cutting slab.

### DETAILED DESCRIPTION

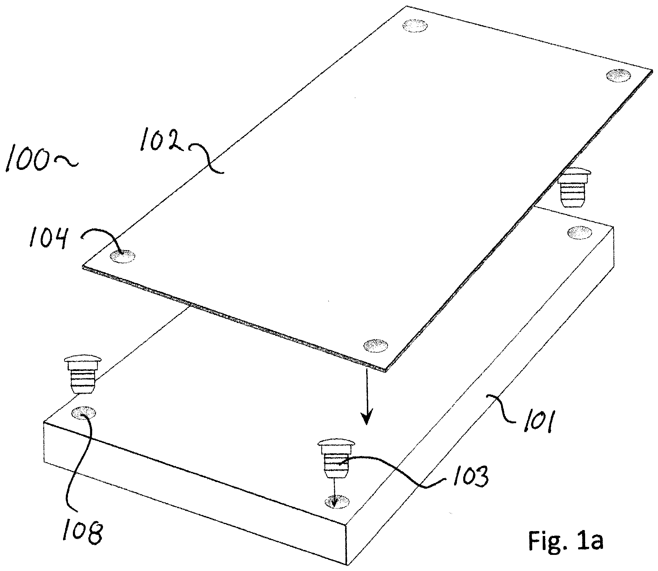

A cutting board system according to an embodiment of the invention is shown in Fig. 1a. The system 100 comprises a rigid support base 101 and a slab 102 defining a work surface for cutting food products. The slab 102, which is much thinner than the base 101, is removably associated with the support base 101, and the support base 101 holds a number of retaining elements 103 and the slab 102 has corresponding retaining openings 104, whereby the slab 102 can be secured to the base 101 by placing the slab 102 on top of the base 101 with part of the retaining elements 103 extending through the retaining openings 104.

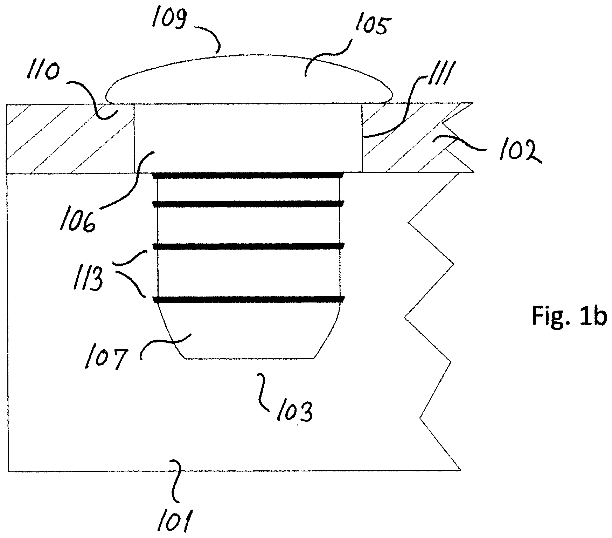

The design of the retaining elements 103 is illustrated in Fig. 1b, which is an enlarged view showing a corner part of the cutting board system 100, with a retaining element 103 inserted into the board 101, and with the cutting slab 102 secured on top of the board 101 by use of the retaining elements 103 and corresponding retaining openings 104. Each retaining element has a head part 105 on top of a shoulder part 106, which again is on top of a body part 107. The head part 105 has a larger cross-sectional area than the shoulder part 106, and the body part 107 is inserted in a corresponding recess 108 of the support base 101. The height and cross-sectional area of the shoulder part 106 is fitted or dimensioned to the thickness of the slab 102 and the cross-sectional area of the retaining opening 104 of the slab 102. The upper surface 109 of the head part 105 is curved upwards, and the cross-sectional area of the retaining openings 104 is slightly smaller than the cross-sectional area of the head part 105 of the retaining elements 103.

As the head part 105 has a larger cross-sectional area than the area of the retaining openings 104, then when the cutting slab 102 is fixed to the support base 101, the lower surface part 110 of the head part 105 of each retaining element covers the enclosing wall 111 of the corresponding retaining opening 104 of the slab 102. The slab is made of an at least partly flexible material, such as for example polypropylene, thereby allowing the curved upwards head part 109 of the retaining elements 103 to be pressed through the retaining openings 104 when fixing the slab to the support base. In the preferred embodiment, the head part 105 of the retaining elements 103 has a curved edge 112 connecting the coved upper surface 109 with a straight lower surface of the head 105. Such a curved edge makes it easier to remove the slab 102, once it has been fixed to the support base 101.

According to an embodiment of the invention, the diameter of the head part 105 is in the range of 0,2-0,5 mm larger than the diameter of the retaining openings 104. In a preferred embodiment the diameter of the head part is about 0,35 mm larger than the diameter of the retaining openings 104. In order for the cutting slab 102 to be securely fixed to the base 101, the cross-sectional area of the retaining element shoulder 106 should be substantially equal to the cross-sectional area of the retaining openings 104. Here, the retaining opening 104 may have a cross- sectional diameter being equal to or slightly larger, such as for example up to 0,1 mm or such as up to 0,05 mm larger than the diameter of the shoulder 106.

It is also within embodiments of the invention that the height of the shoulder 106, which equals the height from the top surface of the base 101 to the lower surface of the head part 105, is substantially equal to the thickness of the cutting slab 102. Here, the shoulder 106 may have a height equal to or slightly higher, such as for example up to 0,1 mm or up to 0,05 mm higher than the thickness of the cutting slab 104. It is preferred that the thickness of the slab is in the range of 0,5-3 mm, such as about 1 mm.

The upper surface 109 of the head 105 is curved upwards, and the height or thickness of the head 105 may be about 1-2 mm at the highest point. The curved upper surface 109 not only allows the head 105 to be pressed through the slab opening 104, but if a cutting knife hits the head 105, the knife will slide down from curved surface 109 and avoid further contact with the head 105.

The present invention also covers embodiments, wherein the shoulder part 106 of the retaining element 103 has a larger cross-sectional area than the body part 107. The body part 107 is inserted in a corresponding recess 108 of the support base 101 whereby a lower surface part of the shoulder part 106 rests on the support base and covers part of the support base 101. The cross-sectional area of the shoulder part 106 is also larger than the cross-sectional area of the recess 108, whereby the shoulder part 107 provides an efficient closure of the recess 108, when the retaining element 103 is inserted into the recess 108. Here, the cross- sectional area of the recess 108 is substantially equal to the cross-sectional area of the body part 107.

By having the shoulder part 107 providing a closure for the recess 108, fluid from food being processed is prevented from entering the recess 108. Similarly, as the retaining openings 104 are fitted to the shoulder part 106, the head part 105 of the retaining element provides a closure for the retaining openings 104, which prevents fluid from food being processed to enter to opening 104.

According to an embodiment of the invention, the retaining elements 103 are dimensioned so that the diameter of the body part 107 is about 7,55 mm, the diameter of the shoulder part 106 is about 9,45 mm, and the diameter of the head part is about 9,85 mm. The diameter of the retaining openings 104 is about 9,50 mm. The support base may be made of polyethylene and have thickness, which for example can be in the range of 8-40 mm, such as about 22 mm, and the diameter of the recesses 108 is about 7,55 mm.

In order for the retaining elements 103 to be securely fixed in the support base 101, a number of projecting streaks or rings 113 are provided at the body part 107 of the retaining elements 103 for locking the elements 103 to the base 101. The locking streaks or rings 113 have an angled outer circumference providing a relatively sharp upper edge at the streaks or rings 113. When a retaining element 103 is inserted into a recess 108, the edge of a ring or streak 113 is pressed into the wall of the recess 108 and functions as a barb, thereby securely fixing the element 103 into the recess 108. The close engagement between the recess wall and the streaks or rings113 further helps to provide an efficient closure of the recesses 108.

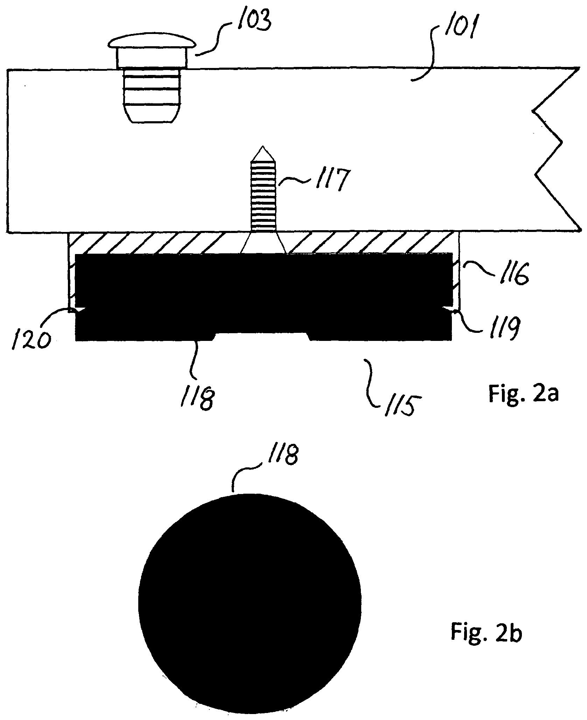

In order to stabilize the cutting board in use, a number of feet are provided at the bottom of the rigid support base 101. This is illustrated in Figs. 2a and 2b. It is preferred that a foot 115 is provided at the bottom of the support base 101 at each corner of the base 101. Each foot has a stainless steel part 116 being secured to the support base 101, which may be by a screw 117, and a rubber part 118 inserted into the stainless steel part 116 and extending below the stainless steel part 116. The stainless steel part 116 has a lower edge 119 angled or curved inwards, and the rubber part has a corresponding groove 120, and the rubber part 118 is connected to the stainless steel part 116 by the lower edge 119 being inserted into the groove 118. The lower edge 119 reaches all the way round the stainless steel part 116, and the groove 120 reaches all the way round the rubber part 118, whereby a substantially watertight connection is obtained between the steel part 116 and the rubber part 117. The rubber parts 118 stabilize the support base 101 when in use, and the closure provided by the edge 119 and the groove 120 helps to prevent fluid to enter in between the steel part 116 and the rubber part 119.

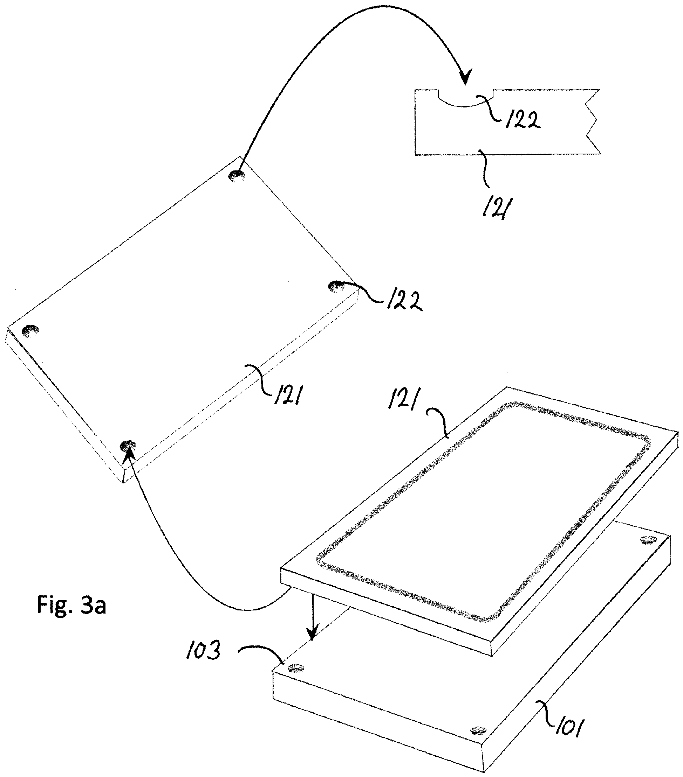

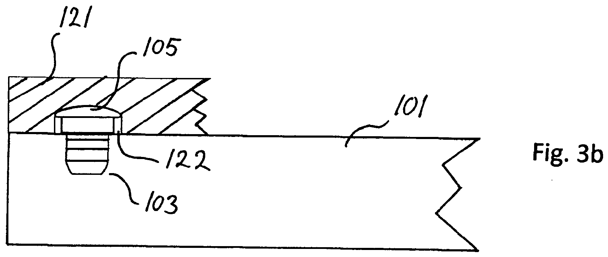

Figs. 3a and 3b illustrate a further embodiment of the cutting board system of Fig. 1 in which an upper cutting or chopping board 121 replaces the cutting slab 102. The upper chopping board 121 is shaped to fit the support base 101 and has a number of upper recesses 122 corresponding to the retaining elements 103 of the support base 101. The opening of these upper recesses 122 is dimensioned to fit over the head part 105 and shoulder part 106 of the retaining elements 103, whereby the upper chopping board 121 can be arranged on top of the support base 101 with the head 105 and shoulder part 106 of the retaining elements 103 extending into the upper recesses 122. The cross-sectional area of an upper chopping board recess 122 is substantially equal to or slightly larger than the cross-sectional area of the head part 105 of the corresponding retaining element.

Both the support base 101 and the upper chopping board 121 may be made of polyethylene, while the cutting slab 102 may be made of polypropylene. The thickness of the upper chopping board 121 may be in the range of 10-40 mm, such as about 22 mm, and it is preferred that the thickness of the chopping board 121 and the thickness of the support base 101 are close to each other. The support base 101 can be produced in many different dimensions, and it is preferred that surface area of the slab 102 equals the surface area of the support base 101. It is also preferred that the surface area of the upper chopping board 121 equals the surface area of the support base 101. Typical dimensions of the support base 101 may be 28x28 cm, 30x40 cm, and 30x50cm.

It should be understood that cutting board system of the present invention may include several cutting slabs 102 with the same dimensions. These slabs may have different colours. Thus, instead of having multiple separate cutting boards, a user may have the cutting board system of the present invention holding only one support base 101, but with a number of cutting slabs 102 corresponding to the previous number of separate cutting boards.

## Claims

1. A cutting board system (100) comprising:
a rigid support base (101) and a slab (102) defining a work surface for cutting food products, said slab (102) being removably associated with the support base (101), with the support base (102) holding a plurality of retaining elements (103) and the slab (102) having corresponding retaining openings (104),
wherein each retaining element (103) has a head part (105) on top of a shoulder part (106) on top of a body part (107), with the head part (105) having a larger cross-sectional area than the shoulder part (106) and with the body part (107) being inserted in a corresponding recess (108) of the support base (101), the height and cross-sectional area of the shoulder part (106) being fitted to the thickness of the slab (102) and the cross-sectional area of a retaining opening (104) of the slab (102), and
wherein the cross-sectional area of the retaining openings (104) are slightly smaller than the cross-sectional area of the head part (105) of the retaining elements (103), and wherein
the upper surface (109) of the head part (105) is curved upwards, and the slab (102) is made of an at least partly flexible material, thereby allowing the curved upwards head part (105) of the retaining elements (103) to be pressed through the retaining openings (104) when fixing the slab (102) to the support base (101).

2. A cutting board system (100) according to claim 1, wherein when the slab (102) is fixed to the support base (101) via the retaining elements (103) and retaining openings (104), the lower surface part (110) of the head part (105) of each retaining element (103) covers the enclosing wall (111) of the corresponding retaining opening (104) of the slab (102).

3. A cutting board system (100) according to claim 1 or 2, wherein the shoulder part (106) has a larger cross-sectional area than the body part (107) of the retaining element (103), and the body part (107) is inserted in a corresponding recess (108) of the support base (101) whereby a lower surface part of the shoulder part (106) rests on the support base (101).

4. A cutting board system (100) according to any one of the claims 1-3, wherein the height of the retaining element shoulder (106) is substantially equal to the thickness of the slab (102).

5. A cutting board system (100) according to any one of the claims 1-4, wherein the cross-sectional area of the retaining element shoulder (106) is substantially equal to the cross-sectional area of the retaining openings (104).

6. A cutting board system according (100) to any one of the claims 1-5, wherein the head part (105) of the retaining elements (103) has a curved edge connecting the curved upper surface (109) with a straight lower surface (110).

7. A cutting board system (100) according to any one of the claims 1-6, wherein a number of projecting streaks (113) are provided at the body part (107) of the retaining elements (103).

8. A cutting board system (100) according to claims 6 and 7, wherein the cross-sectional area of the recesses (108) of the support base (101) is substantially equal to the cross-sectional area of the body part (107) of the corresponding retaining elements (103).

9. A cutting board system (100) according to any one of the claims 1-8, wherein a number of feet (115) are provided at the bottom of the rigid support base (101), with a foot (115) having a stainless steel part (116) being secured to the support base (101) and a rubber part (118) inserted into the stainless steel part (116) and extending below the stainless steel part (116).

10. A cutting board system (100) according to claim 9, wherein the stainless steel part (116) has a lower edge (119) angled or curved inwards, and the rubber part (118) has a corresponding groove (120), with the rubber part (118) being connected to the stainless steel part (116) by the lower edge (119) being inserted into the groove (120).

11. A cutting board system (100) according to claim 10, wherein said lower edge (119) reaches all the way round the stainless steel part (116) and said groove (120) reaches all the way round the rubber part (118), whereby a substantially watertight connection is obtained between the steel part (116) and the rubber part (120).

12. A cutting board system (100) according to any one of the claims 1-11, further comprising an upper chopping board (121) shaped to fit the support base (101) and having a number of recesses (122) corresponding to the retaining elements (103) of the support base (101), the opening of said recesses (122) being dimensioned to fit over the head part (105) and shoulder part (106) of the retaining elements (103), whereby the upper chopping board (121) can be arranged on top of the support base (101) with the head and shoulder parts (105, 106) of the retaining elements (103) extending into the recesses (122).

13. A cutting board system (100) according to claim 12, wherein the cross-sectional area of an upper chopping board recess (122) is substantially equal to or slightly larger than the cross-sectional area of the head part (105) of the corresponding retaining element (103).

14. A cutting board system (100) according to any one of the claims 1-13, wherein the rigid support base (101) is made of polyethylene and the slab (102) is made of polypropylene.

15. A cutting board system (100) according to any one of the claims 1-14, wherein the system (100) comprises a plurality of slabs (102) of same dimensions.

## Patentansprüche

1. Schneidebrettsystem (100), umfassend:
eine starre Tragbasis (101) und eine Platte (102), die eine Arbeitsfläche zum Schneiden von Nahrungsmittelprodukten definiert, wobei die Platte (102) der Tragbasis (101) entfernbar zugeordnet ist, wobei die Tragbasis (102) mehrere Halteelemente (103) hält und die Platte (102) entsprechende Halteöffnungen (104) aufweist,
wobei jedes Halteelement (103) ein Kopfteil (105) oben auf einem Schulterteil (106) oben auf einem Körperteil (107) aufweist, wobei das Kopfteil (105) einen größeren Querschnittsbereich aufweist als das Schulterteil (106) und wobei das Kopfteil (107) in einer entsprechenden Vertiefung (108) der Tragbasis (101) eingesetzt ist, wobei die Höhe und der Querschnittsbereich des Schulterteils (106) an der Dicke der Platte (102) und der Querschnittsbereich einer Halteöffnung (104) der Platte (102) angebracht sind, und
wobei der Querschnittsbereich der Halteöffnungen (104) leicht kleiner ist als der Querschnittsbereich des Kopfteils (105) der Halteelemente (103), und
wobei die obere Fläche (109) des Kopfteils (105) aufwärts gekrümmt ist und die Platte (102) aus einem zumindest teilweise flexiblen Material hergestellt ist, wodurch es dem aufwärts gekrümmten Kopfteil (105) der Halteelemente (103) erlaubt ist, durch die Halteöffnungen (104) gedrückt zu werden, wenn die Platte (102) an der Tragbasis (101) befestigt wird.

2. Schneidebrettsystem (100) nach Anspruch 1, wobei, wenn die Platte (102) an der Tragbasis (101) über die Halteelemente (103) und Halteöffnungen (104) befestigt ist, das untere Flächenteil (110) des Kopfteils (105) jedes Halteelements (103) die umschließende Wand (111) der entsprechenden Halteöffnung (104) der Platte (102) abdeckt.

3. Schneidebrettsystem (100) nach Anspruch 1 oder 2, wobei das Schulterteil (106) einen größeren Querschnittsbereich aufweist als das Körperteil (107) des Halteelements (103) und das Körperteil (107) in einer entsprechenden Vertiefung (108) der Tragbasis (101) eingesetzt ist, wodurch ein unteres Flächenteil des Schulterteils (106) auf der Tragbasis (101) ruht.

4. Schneidebrettsystem (100) nach einem der Ansprüche 1 - 3, wobei die Höhe der Halteelementschulter (106) im Wesentlichen gleich der Dicke der Platte (102) ist.

5. Schneidebrettsystem (100) nach einem der Ansprüche 1 - 4, wobei der Querschnittsbereich der Halteelementschulter (106) im Wesentlichen gleich dem Querschnittsbereich der Halteöffnungen (104) ist.

6. Schneidebrettsystem (100) nach einem der Ansprüche 1 - 5, wobei das Kopfteil (105) der Halteelemente (103) einen gekrümmten Rand aufweist, der die gekrümmte obere Fläche (109) mit einer geraden unteren Fläche (110) verbindet.

7. Schneidebrettsystem (100) nach einem der Ansprüche 1 - 6, wobei eine Anzahl von vorstehenden Streifen (113) an dem Körperteil (107) der Halteelemente (103) bereitgestellt ist.

8. Schneidebrettsystem (100) nach Anspruch 6 und 7, wobei der Querschnittsbereich der Vertiefungen (108) der Tragbasis (101) im Wesentlichen gleich dem Querschnittsbereich des Körperteils (107) der entsprechenden Halteelemente (103) ist.

9. Schneidebrettsystem (100) nach einem der Ansprüche 1 - 8, wobei eine Anzahl von Füßen (115) an dem Boden der starren Tragbasis (101) bereitgestellt ist, wobei ein Fuß (115) ein rostfreies Stahlteil (116), das an der Tragbasis (101) gesichert ist, und ein Gummiteil (118), das in das rostfreie Stahlteil (116) eingesetzt ist und sich unterhalb des rostfreien Stahlteils (116) erstreckt, aufweist.

10. Schneidebrettsystem (100) nach Anspruch 9, wobei das rostfreie Stahlteil (116) einen unteren Rand (119) aufweist, das nach innen abgewinkelt oder gekrümmt ist, und das Gummiteil (118) eine entsprechende Nut (120) aufweist, wobei das Gummiteil (118) mit dem rostfreien Stahlteil (116) durch den unteren Rand (119) verbunden ist, der in die Nut (120) eingesetzt ist.

11. Schneidebrettsystem (100) nach Anspruch 10, wobei der untere Rand (119) den ganzen Weg um das rostfreie Stahlteil (116) reicht und die Nut (120) den ganzen Weg um das Gummiteil (118) reicht, wodurch eine im Wesentlichen wasserdichte Verbindung zwischen dem Stahlteil (116) und dem Gummiteil (120) erhalten wird.

12. Schneidebrettsystem (100) nach einem der Ansprüche 1 - 11, ferner umfassend ein oberes Hackbrett (121), das geformt ist, um zu der Tragbasis (101) zu passen, und eine Anzahl von Vertiefungen (122) entsprechend den Halteelementen (103) der Tragbasis (101) aufweist, wobei die Öffnung der Vertiefungen (122) bemessen ist, um über das Kopfteil (105) und Schulterteil (106) der Halteelemente (103) zu passen, wodurch das obere Hackbrett (121) oben auf der Tragbasis (101) mit den Kopf- und Schulterteilen (105, 106) der Halteelemente (103) angeordnet sein kann, die sich in die Vertiefungen (122) erstrecken.

13. Schneidebrettsystem (100) nach Anspruch 12, wobei der Querschnittsbereich einer oberen Hackbrettvertiefung (122) im Wesentlichen gleich oder leicht größer als der Querschnittsbereich des Kopfteils (105) des entsprechenden Halteelements (103) ist.

14. Schneidebrettsystem (100) nach einem der Ansprüche 1 - 13, wobei die starre Tragbasis (101) aus Polyethylen hergestellt ist und die Platte (102) aus Polypropylen hergestellt ist.

15. Schneidebrettsystem (100) nach einem der Ansprüche 1 - 14, wobei das System (100) mehrere Platten (102) mit gleichen Abmessungen umfasst.

## Revendications

1. Système de planche à découper (100), comprenant :
une base de support rigide (101) et une plaque (102) définissant une surface de travail pour découper des produits alimentaires, ladite plaque (102) étant associée de façon amovible à la base de support (101), la base de support (101) comportant une pluralité d'éléments de retenue (103) et la plaque (102) présentant des ouvertures de retenue (104) correspondantes,
dans lequel chaque élément de retenue (103) comporte une partie de tête (105) au-dessus d'une partie d'épaule (106) au-dessus d'une partie de corps (107), la partie de tête (105) présentant une aire de section transversale plus grande que celle de la partie d'épaule (106) et la partie de corps (107) étant insérée dans une cavité (108) correspondante de la base de support (101), la hauteur et l'aire de section transversale de la partie d'épaule (106) étant adaptées à l'épaisseur de la plaque (102) et à l'aire de section transversale d'une ouverture de retenue (104) de la plaque (102), et
dans lequel l'aire de section transversale des ouvertures de retenue (104) est légèrement plus petite que l'aire de section transversale de la partie de tête (105) des éléments de retenue (103), et dans lequel
la surface supérieure (109) de la partie de tête (105) est courbée vers le haut, et la plaque (102) est constituée d'un matériau au moins partiellement souple, permettant ainsi de presser la partie de tête (105) des éléments de retenue (103) courbée vers le haut à travers les ouvertures de retenue (104) lors de la fixation de la plaque (102) à la base de support (101) .

2. Système de planche à découper (100) selon la revendication 1, dans lequel, lorsque la plaque (102) est fixée à la base de support (101) par le biais des éléments de retenue (103) et des ouvertures de retenue (104), la partie de surface inférieure (110) de la partie de tête (105) de chaque élément de retenue (103) recouvre la paroi extérieure (111) de l'ouverture de retenue (104) correspondante de la plaque (102).

3. Système de planche à découper (100) selon la revendication 1 ou 2, dans lequel la partie d'épaule (106) présente une aire de section transversale plus grande que celle de la partie de corps (107) de l'élément de retenue (103), et la partie de corps (107) est insérée dans une cavité (108) correspondante de la base de support (101), moyennant quoi une partie de surface inférieure de la partie d'épaule (106) s'appuie sur la base de support (101).

4. Système de planche à découper (100) selon l'une quelconque des revendications 1 à 3, dans lequel la hauteur de l'épaule (106) de l'élément de retenue est substantiellement égale à l'épaisseur de la plaque (102) .

5. Système de planche à découper (100) selon l'une quelconque des revendications 1 à 4, dans lequel l'aire de section transversale de l'épaule (106) de l'élément de retenue est substantiellement égale à l'aire de section transversale des ouvertures de retenue (104).

6. Système de planche à découper (100) selon l'une quelconque des revendications 1 à 5, dans lequel la partie de tête (105) des éléments de retenue (103) présente un bord courbe reliant la surface supérieure courbe (109) à une surface inférieure rectiligne (110) .

7. Système de planche à découper (100) selon l'une quelconque des revendications 1 à 6, dans lequel un nombre de stries saillantes (113) sont prévues sur la partie de corps (107) des éléments de retenue (103).

8. Système de planche à découper (100) selon les revendications 6 et 7, dans lequel l'aire de section transversale des cavités (108) de la base de support (101) est substantiellement égale à l'aire de section transversale de la partie de corps (107) des éléments de retenue (103) correspondants.

9. Système de planche à découper (100) selon l'une quelconque des revendications 1 à 8, dans lequel un nombre de pieds (115) sont prévus sur le bas de la base de support (101) rigide, un pied (115) comportant une partie en acier inoxydable (116) fixée à la base de support (101) et une partie en caoutchouc (118) insérée dans la partie en acier inoxydable (116) et s'étendant en dessous de la partie en acier inoxydable (116) .

10. Système de planche à découper (100) selon la revendication 9, dans lequel la partie en acier inoxydable (116) comporte un bord inférieur (119) coudé ou courbé vers l'intérieur, et la partie en caoutchouc (118) comporte une rainure (120) correspondante, la partie en caoutchouc (118) étant reliée à la partie en acier inoxydable (116) par le bord inférieur (119) inséré dans la rainure (120).

11. Système de planche à découper (100) selon la revendication 10, dans lequel ledit bord inférieur (119) atteint tout le tour de la partie en acier inoxydable (116) et ladite rainure (120) atteint tout le tour de la partie en caoutchouc (118), moyennant quoi une connexion substantiellement étanche à l'eau est obtenue entre la partie en acier (116) et la partie en caoutchouc (118).

12. Système de planche à découper (100) selon l'une quelconque des revendications 1 à 11, comprenant en outre une planche de hachage supérieure (121) formée de manière à s'adapter à la base de support (101) et présentant un nombre de cavités (122) correspondant aux éléments de retenue (103) de la base de support (101), l'ouverture de ladite cavité (122) étant dimensionnée de manière à s'ajuster sur la partie de tête (105) et la partie d'épaule (106) des éléments de retenue (103), moyennant quoi la planche de hachage supérieure (121) peut être disposée sur la base de support (101), les parties de tête et d'épaule (105, 106) des éléments de retenue (103) s'étendant dans les cavités (122).

13. Système de planche à découper (100) selon la revendication 12, dans lequel l'aire de section transversale d'une cavité (122) de planche de hachage supérieure est substantiellement égale ou légèrement inférieure à l'aire de section transversale de la partie de tête (105) de l'élément de retenue (103) correspondant.

14. Système de planche à découper (100) selon l'une quelconque des revendications 1 à 13, dans lequel la base de support (101) rigide est constituée de polyéthylène et la plaque (102) est constituée de polypropylène.

15. Système de planche à découper (100) selon l'une quelconque des revendications 1 à 14, dans lequel le système (100) comprend une pluralité de plaques (102) avec les mêmes dimensions.
